# EUROPÄISCHE PATENTSCHRIFT

(11) **EP 2 373 513 B1**
(45) Veröffentlichungstag und Bekanntmachung des Hinweises auf die Patenterteilung: **19.02.2014**
(21) Anmeldenummer: 09764820.8
(22) Anmeldetag: 03.12.2009
(51) Int. Cl.: B60K 15/077, B60K 15/03

(54) **FLÜSSIGKEITSBEHÄLTER FÜR EIN KRAFTFAHRZEUG**
LIQUID RESERVOIR FOR A MOTOR VEHICLE
RESERVOIR DE LIQUIDE POUR VEHICULE AUTOMOBILE

(30) Priorität: 03.12.2008 DE 102008060121
(43) Veröffentlichungstag der Anmeldung: 12.10.2011
(73) Patentinhaber: Emitec Gesellschaft für Emissionstechnologie mbH, 53797 Lohmar (DE)
(72) Erfinder: SMIRRA, Karl, 83512 Wasserburg (DE)
(74) Vertreter: Rössler, Matthias
(86) Internationale Anmeldenummer: PCT/EP2009/066353
(87) Internationale Veröffentlichungsnummer: WO 2010/063801

(56) Entgegenhaltungen:
- DE-A1- 2 456 525
- DE-A1- 2 830 443
- DE-A1- 10 041 678

## Beschreibung

Die Erfindung betrifft einen Flüssigkeitsbehälter für ein Kraftfahrzeug mit einer Sammeleinrichtung und einem Sammelbehälter zur Sammlung von Flüssigkeit, wobei die Sammeleinrichtung über den Boden des Flüssigkeitsbehälters übersteht.

Solche Flüssigkeitsbehälter werden in heutigen Kraftfahrzeugen, insbesondere zum Speichern von Kraftstoff, Harnstoff oder Scheibenreinigungsflüssigkeit häufig eingesetzt und sind aus der Praxis bekannt. Aus der Praxis ist ein als Kraftstoffbehälter ausgebildeter Flüssigkeitsbehälter bekannt mit einer oder mehreren, an verschiedenen Stellen angeordneten Saugstrahlpumpen, welche Kraftstoff aus den verschiedenen Stellen des Flüssigkeitsbehälters ansaugen und einer Kraftstoff-Fördereinheit zuführen. Die Saugstrahlpumpen werden von der Kraftstoff-Fördereinheit mit Kraftstoff als Treibmittel versorgt. Hierdurch soll auch bei nahezu leerem Kraftstoffbehälter sichergestellt werden, dass jederzeit ausreichend Kraftstoff für die Kraftstoff-Fördereinheit zur Verfügung steht. Die Anordnung der Sammeleinrichtung über dem Boden des Kraftstoffbehälters ermöglicht die ebene Gestaltung des Bodens des Kraftstoffbehälters. Eine ebenfalls mögliche Ausbeulung des Kraftstoffbehälters zum Sammeln des Kraftstoffs wird hierdurch vermieden. Damit kann der Kraftstoffbehälter flach gestaltet sein und auch bei eng begrenzten räumlichen Gegebenheiten im Kraftfahrzeug eingesetzt werden.

Nachteilig bei dem bekannten Flüssigkeitsbehälter ist, dass die Anordnung einer Vielzahl von Saugstrahlpumpen verteilt im Flüssigkeitsbehälter einen sehr großen Montageaufwand erfordert. Eine Vielzahl an Saugstrahlpumpen ist bei solchen Flüssigkeitsbehältern jedoch notwendig, da die Flüssigkeit bei einer Neigung des Kraftfahrzeuges zu einer Seite hin ablaufen kann. Weiterhin ist die Sammeleinrichtung hierdurch sehr komplex aufgebaut und damit störanfällig.

Aus der gattungsbildenden DE 24 56 525 A1 ist ein Kraftstoffbehälter für eine Brennkraftmaschine bekannt. In dem Kraftstoffbehälter ist ein Ansaugbecher vorgesehen, wobei benachbart zu diesem Ansaugbecher Schottwände angeordnet sind.

Die DE 100 41 678 A1 offenbart einen Kraftstoffbehälter für ein Landfahrzeug mit einem Bodenbereich, in dem ein Sammelpunkt vorgesehen ist, an dem über eine Kraftstoffentnahmeanordnung Kraftstoff aus dem Kraftstoffbehälter entnommen werden kann. Der Boden hat eine im Wesentlichen ebene Grundfläche, auf der mehrere einzeln stehende, korrespondierende Stauwände angeordnet sind, die den Sammelpunkt in einem Abstand umgeben. Bei üblichen Bewegungen des Fahrzeuges im Fahrbetrieb lenken die Stauwände den sich relativ zum Kraftstoffbehälter bewegenden Kraftstoff aus einem entfernten Umgebungsbereich hin zum Sammelpunkt bzw. verhindern einen Abfluss des Kraftstoffs im Bereich des Sammelpunktes.

Der Erfindung liegt das Problem zugrunde, einen Flüssigkeitsbehälter der eingangs genannten Art so weiter zu bilden, dass er auch bei einer geringen Restmenge an Flüssigkeit eine zuverlässige Befüllung des Sammelbehälters sicherstellt und besonders einfach aufgebaut ist.

Dieses Problem wird erfindungsgemäß von einem Flüssigkeitsbehälter gemäß den Merkmalen des Anspruchs 1 gelöst. Insbesondere weist die Sammeleinrichtung mehrere im Innenraum des Flüssigkeitsbehälters angeordnete Leitelemente auf und die Leitelemente sind von einem von dem Sammelbehälter beabstandeten Bereich zu dem Sammelbehälter geführt, wobei die Sammeleinrichtung einen den Sammelbehälter umschließenden Sammelteller hat und die Leitelemente auf dem Sammelteller angeordnet sind.

Bevorzugt ist bei dieser Lösung, dass wenigstens eines der Leitelemente unbeweglich im Innenraum des Flüssigkeitsbehälters ist, wobei ggf. alle Leitelemente unbeweglich im Innenraum des Flüssigkeitsbehälters angeordnet sein können.

Gegebenenfalls können Teile der Leitelemente oder Zusatzelemente der Sammeleinrichtung beweglich sein, wie z. B. Rückschlagklappen und der gleichen.

Die "geführte" Anordnung der Leitelemente ergibt sich insbesondere auch aus ihrem, bevorzugt ununterbrochenen, Verlauf von einem von dem Sammelbehälter beabstandeten Bereich hin zu dem Sammelbehälter.

Durch diese Gestaltung gelangt in dem Innenraum des erfindungsgemäßen Flüssigkeitsbehälters umherschwappende Flüssigkeit gegen die Leitelemente. Von den Leitelementen wird die Flüssigkeit in den Sammelbehälter geleitet. Erfindungsgemäß werden auf die Flüssigkeit einwirkende Beschleunigungs-, Verzögerungs- und Richtungsänderumgskräfte genutzt, um sie dem Sammelbehälter zuzuführen. Da im Betrieb des Kraftfahrzeuges ständig Kräfte auf die innerhalb des Flüssigkeitsbehälters befindliche Flüssigkeit einwirken, ermöglicht der erfindungsgemäße Flüssigkeitsbehälter die Sammlung auch geringer Restmengen in dem Sammelbehälter. Aus dem Sammelbehälter kann anschließend die Flüssigkeit entnommen werden. Hierdurch benötigt die Sammeleinrichtung keine Fremdenergie oder Regelvorrichtungen zur Befüllung des Sammelbehälters. Die Sammeleinrichtung ist zudem durch die (bevorzugt) feststehenden Bauteile wartungsfrei.

Die Sammeleinrichtung lässt sich an nahezu beliebigen Stellen des erfindungsgemäßen Flüssigkeitsbehälters anordnen, wenn die Sammeleinrichtung einen den Sammelbehälter umschließenden Sammelteller hat und wenn die Leitelemente auf dem Sammelteller angeordnet sind.

Bei dem wenigstens einen Sammelbehälter kann es sich um eine separate (ggf. nachrüchstbares) oder eine mit dem Sammelbehälter (insbesondere mit dem Boden) integrale Komponente handeln.

Zur Vereinfachung der Führung der Flüssigkeit in den Sammelbehälter trägt es gemäß einer anderen vorteilhaften Weiterbildung der Erfindung bei, wenn der Sammelteller oberhalb eines Bodens des Flüssigkeitsbehälters angeordnet ist und Öffnungen aufweist. Auf dem Boden des Flüssigkeitsbehälters umher schwappende Flüssigkeit gelangt durch die Öffnungen auf die Oberseite des Sammeltellers und wird dort mittels der Leitelemente dem Sammelbehälter zugeführt. Zur Vermeidung eines Zurückfließens von Flüssigkeit durch die Öffnungen können Rückschlagklappen eingesetzt werden.

Ein Ablaufen der auf der Oberseite des Sammeltellers befindlichen Flüssigkeit lässt sich einfach vermeiden, wenn am Umfang des Sammeltellers ein aufgestellter Rand angeordnet ist. Der aufgestellte Rand verhindert ein schnelles Zurückschwappen der Flüssigkeit und kann wahlweise einstückig mit dem Sammelteller oder als Wandung des Flüssigkeitsbehälters ausgebildet sein.

Die Sammeleinrichtung ermöglicht auch bei Flüssigkeitsbehältern mit einem ebenen Boden eine Führung der Flüssigkeit in den Sammelbehälter, wenn der Sammelteller an seiner dem Sammelbehälter zugewandten Seite höher ist als an seiner den Öffnungen zugewandten Seite. Hierdurch ist die Sammeleinrichtung auch bei besonders niedrigen Flüssigkeitsbehältern einsetzbar.

Zur weiteren Vereinfachung des Aufbaus der Sammeleinrichtung trägt es gemäß einer anderen vorteilhaften Weiterbildung der Erfindung bei, wenn der Sammelteller kegelstumpfförmig, zum Rand hin abfallend gestaltet ist und in der Mitte den Sammelbehälter aufweist.

Der Sammelbehälter könnte beispielsweise an einer Seite des Flüssigkeitsbehälters angeordnet sein. Die Leitelemente lassen sich jedoch gemäß einer anderen vorteilhaften Weiterbildung der Erfindung besonders kurz gestalten, wenn die Leitelemente sternförmig von dem Sammelbehälter weg geführt sind. Je höher die Anzahl der Leitelemente ist, desto mehr Bewegungsenergie der Flüssigkeit kann für die Zuführung in den Sammelbehälter genutzt werden.

Die Sammeleinrichtung gestaltet sich gemäß einer anderen vorteilhaften Weiterbildung der Erfindung konstruktiv besonders einfach, wenn der Sammelbehälter als Mulde in dem Sammelteller ausgebildet ist.

Fertigungskosten für die Sammeleinrichtung lassen sich gemäß einer anderen vorteilhaften Weiterbildung der Erfindung besonders gering halten, wenn der Sammelbehälter, der Sammelteller und die Leitelemente einstückig aus Kunststoff oder Metall gefertigt sind. Hierdurch lässt sich die Sammeleinrichtung zudem sehr dünnwandig fertigen, so dass das Volumen des Flüssigkeitsbehälters nur unwesentlich vermindert wird.

Der erfindungsgemäße Flüssigkeitsbehälter lässt sich besonders kostengünstig herstellen, wenn die Sammeleinrichtung einstückig mit dem Boden des Flüssigkeitsbehälters gefertigt ist.

Vorhandene Flüssigkeitsbehälter lassen sich einfach nachrüsten, wenn die Sammeleinrichtung als in dem Flüssigkeitsbehälter zu montierendes Einlegeteil ausgebildet ist.

Sich in dem Sammelbehälter ansammelnde Flüssigkeit lässt sich gemäß einer anderen vorteilhaften Weiterbildung der Erfindung einfach absaugen, wenn in oder an dem Sammelbehälter eine Aufnahmevorrichtung zur Befestigung einer Pumpe angeordnet ist. Bei der Pumpe kann es sich beispielsweise um eine Kraftstoff-Fördereinheit zur Förderung von Kraftstoff zu einer Brennkraftmaschine handeln. Alternativ dazu kann es sich bei der Pumpe auch um eine Saugstrahlpumpe handeln, mittels derer Kraftstoff innerhalb des Flüssigkeitsbehälters gefördert wird. Die Aufnahmevorrichtung haltert vorzugsweise einen Saugstutzen der Pumpe.

Die Erfindung findet insbesondere Anwendung bei der Bevorratung und Förderung von Kraftstoff hin zu einer Brennkraftmaschine und/oder bei der Bevorratung und Förderung eines flüssigen Additivs (Oxidationsmittel, Reduktionsmittel, etc.) hin zu einer Komponente (Katalysator, Filter, Mischer,...) eines Abgassystems einer Brennkraftmaschine.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in:
- Fig. 1: einen erfindungsgemäßen Flüssigkeitsbehälter für ein Kraftfahrzeug in einer Schnittdarstellung,
- Fig. 2: vergrößert einen Teilbereich des Flüssigkeitsbehälters aus Figur 1 mit einer Sammeleinrichtung,
- Fig. 3: perspektivisch einen Teilbereich der Sammeleinrichtung aus Figur 2,
- Fig. 4: eine weitere Ausführungsform des Flüssigkeitsbehälters,
- Fig. 5: eine Sammeleinrichtung des Flüssigkeitsbehälters aus Figur 4.

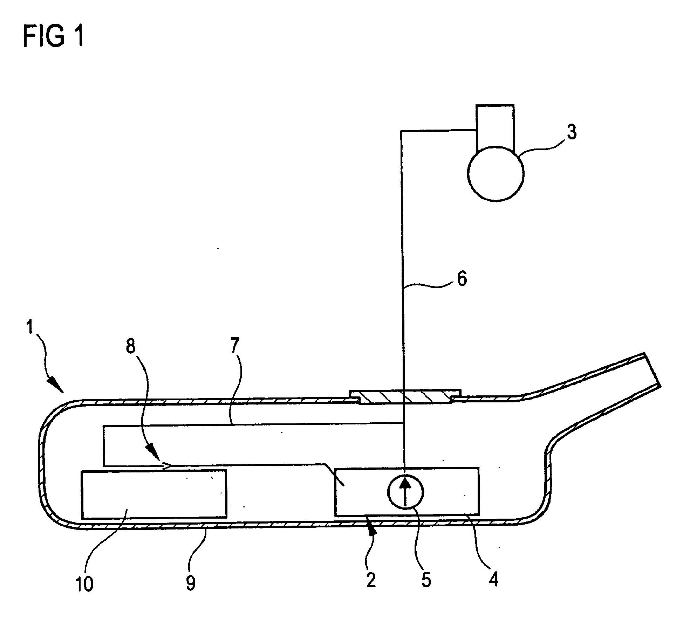

Figur 1 zeigt einen Flüssigkeitsbehälter 1 für ein Kraftfahrzeug mit einer Fördereinheit 2 zur Förderung einer Flüssigkeit (insbesondere Kraftstoff, Harnstoff-Wasser-Lösung oder ähnliches) aus dem Flüssigkeitsbehälter 1 zu einem Verbraucher 3 (z.B. einer Brennkraftmaschine, einem Abgassystem oder dergleichen) des Kraftfahrzeuges. Die Fördereinheit 2 hat eine in einem Schwalltopf 4 angeordnete Pumpe 5, welche über eine Vorlaufleitung 6 mit dem Verbraucher 3 verbunden ist. Von der Vorlaufleitung 6 führt ein Abzweig 7 zu einer Saugstrahlpumpe 8. Die Saugstrahlpumpe 8 saugt die Flüssigkeit aus einer am Boden 9 des Flüssigkeitsbehälters 1 angeordneten Sammeleinrichtung 10 an. Stellvertretend für eine Vielzahl von möglichen, im Flüssigkeitsbehälter 1 angeordneten Sammeleinrichtungen 10 ist in der Zeichnung nur eine einzige dargestellt. Die Sammeleinrichtung 10 hat die Aufgabe, an einer von der Fördereinheit 2 entfernten Stelle des Flüssigkeitsbehälters 1 Flüssigkeit zu sammeln, so dass diese über die Saugstrahlpumpe 8 angesaugt und der Fördereinheit 2 zugeführt werden kann. Damit wird die Mindest-Restmenge an Flüssigkeit, die im Flüssigkeitsbehälter 1 für einen ordnungsgemäßen Betrieb der Fördereinheit 2 erforderlich ist, möglichst gering gehalten.

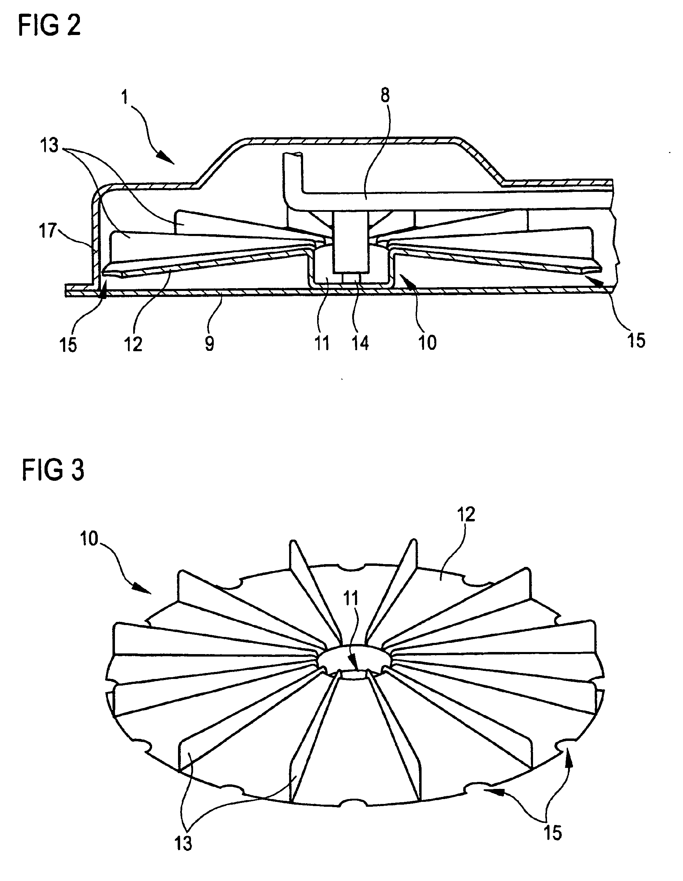

Figur 2 zeigt vergrößert einen die Sammeleinrichtung 10 aufweisenden Teilbereich des Flüssigkeitsbehälters 1 aus Figur 1 in einer Schnittdarstellung. Hierbei ist zu erkennen, dass die Sammeleinrichtung 10 einen Sammelbehälter 11 und einen sich an den Sammelbehälter 11 anschließenden Sammelteller 12 hat. Auf dem Sammelteller 12 sind Leitelemente 13 angeordnet, welche von einem von dem Sammelbehälter 11 entfernten Bereich sternförmig zu dem Sammelbehälter 11 geführt sind. Die Leitelemente 13 sind sternförmig um den Sammelbehälter 11 herum angeordnet. In dem Sammelbehälter 11 ist eine Aufnahmevorrichtung 14 für die Saugstrahlpumpe 8 angeordnet. Die Saugstrahlpumpe 8 saugt in dem Sammelbehälter 11 befindliche Flüssigkeit an und fördert diesen zu der in Figur 1 dargestellten Fördereinheit 2. Der Sammelteller 12 ist kegelstumpfförmig, zum Rand hin abfallend gestaltet. Damit grenzt die höchste Stelle des Sammeltellers 12 an den Sammelbehälter 11 an. Der Sammelbehälter 11 ist als Mulde des Sammeltellers 12 ausgebildet. Am äußeren Rand hat der Sammelteller 12 mehrere Öffnungen 15. Durch die Öffnungen 15 kann Flüssigkeit von der Unterseite des Sammeltellers 12 zu der Oberseite strömen und durch Umherschwappen über die Leitelemente 13 dem Sammelbehälter 11 zugeführt werden. Der Sammelteller 12, der Sammelbehälter 11 und die Leitelemente 13 sind einstückig aus Kunststoff gefertigt. Ein um den Sammelteller 12 teilweise umlaufender Rand ist einstückig mit einer seitlichen Wandung 17 des Flüssigkeitsbehälters 1 gefertigt. In einer alternativen, nicht dargestellten Ausführungsform kann der Rand auch an dem Sammelbehälter angeordnet sein.

Figur 3 zeigt perspektivisch die Sammeleinrichtung 10 mit dem Sammelteller 12, dem Sammelbehälter 11 und den Leitelementen 13. Hierbei ist die strahlenförmige, auf den Sammelbehälter 11 zulaufende Gestaltung der Leitelemente 13 besonders deutlich zu erkennen. Die Öffnungen 15 im Sammelteller 12 sind jeweils zwischen zwei Leitelementen 13 angeordnet.

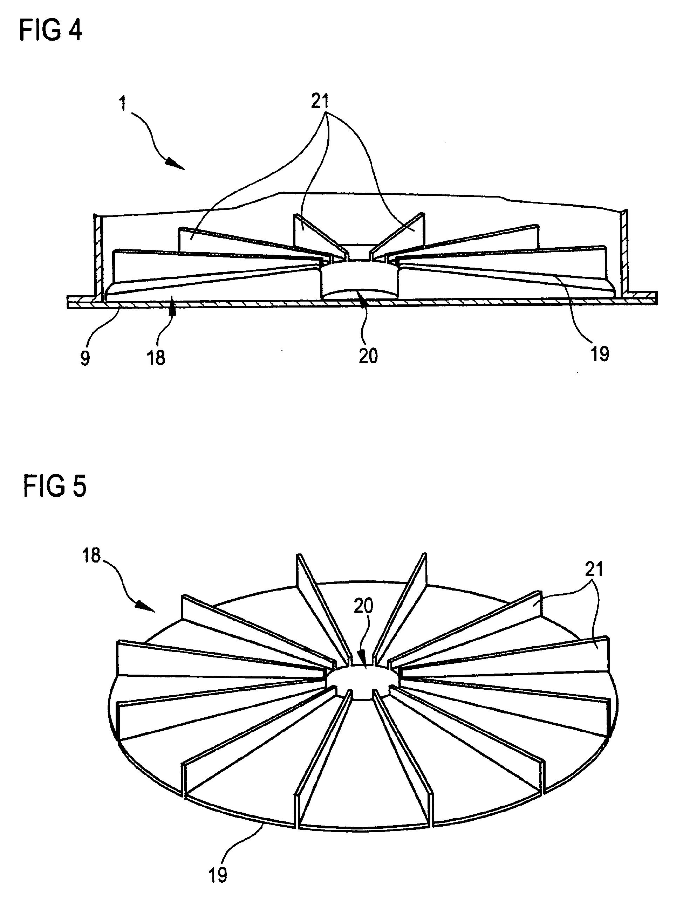

Figur 4 zeigt eine weitere Ausführungsform des Flüssigkeitsbehälters 1, welcher sich von dem aus den Figuren 1 bis 3 dadurch unterscheidet, dass eine Sammeleinrichtung 18 den gesamten Boden 9 des Flüssigkeitsbehälters 1 bedeckt. Die Sammeleinrichtung 18 ist aus Metall im Tiefziehverfahren gefertigt und hat einen Sammelteller 19 mit einem zentrischen, muldenförmigen Sammelbehälter 20. Auf dem Sammelbehälter 20 angeordnete Leitelemente 21 sind von einer Wellenform des Sammeltellers 19 gebildet.

Figur 5 zeigt den Sammelteller 19 mit dem Sammelbehälter 20 und den Leitelementen 21 aus Figur 4 in einer perspektivischen Darstellung.

## Patentansprüche

1. Flüssigkeitsbehälter für ein Kraftfahrzeug mit einer Sammeleinrichtung und einem Sammelbehälter zur Sammlung von Flüssigkeit, wobei die Sammeleinrichtung über den Boden des Flüssigkeitsbehälters übersteht, wobei die Sammeleinrichtung (10, 18) mehrere im Innenraum des Flüssigkeitsbehälters (1) angeordnete Leitelemente (13, 21) aufweist und die Leitelemente (13, 21) von einem von dem Sammelbehälter (11, 20) beabstandeten Bereich zu dem Sammelbehälter (11, 20) geführt sind, **dadurch gekennzeichnet, dass** die Sammeleinrichtung (10, 18) einen den Sammelbehälter (11, 20) umschließenden Sammelteller (12, 19) hat und dass die Leitelemente (13, 21) auf dem Sammelteller (12, 19) angeordnet sind.

2. Flüssigkeitsbehälter nach Anspruch 1, **dadurch gekennzeichnet, dass** der Sammelteller (12, 19) oberhalb eines Bodens (9) des Flüssigkeitsbehälters (1) angeordnet ist und Öffnungen (15) aufweist.

3. Flüssigkeitsbehälter nach Anspruch 1 oder 2, **da- durch gekennzeichnet**, dass am Umfang des Sammeltellers (12, 19) ein aufgestellter Rand angeordnet ist.

4. Flüssigkeitsbehälter nach Anspruch 2 oder 3, **dadurch gekennzeichnet, dass** der Sammelteller (12, 19) an seiner dem Sammelbehälter (11, 20) zugewandten Seite höher ist als an seiner den Öffnungen (15) zugewandten Seite.

5. Flüssigkeitsbehälter nach-einem der Ansprüche 1 bis 4, **dadurch gekennzeichnet, dass** der Sammelteller (12, 19) kegelstumpfförmig, zum Rand hin abfallend gestaltet ist und in der Mitte den Sammelbehälter (11, 20) aufweist.

6. Flüssigkeitsbehälter nach einem der vorhergehenden Ansprüche, **dadurch gekennzeichnet, dass** die Leitelemente (13) sternförmig von dem Sammelbehälter (11, 20) weg geführt sind.

7. Flüssigkeitsbehälter nach einem der Ansprüche 1 bis 6, **dadurch gekennzeichnet, dass** der Sammelbehälter (11, 20) als Mulde in dem Sammelteller (12, 19) ausgebildet ist.

8. Flüssigkeitsbehälter nach einem der Ansprüche 1 bis 7, **dadurch gekennzeichnet, dass** der Sammelbehälter (11, 19), der Sammelteller (12) und die Leitelemente (13, 21) einstückig aus Kunststoff oder Metall gefertigt sind.

9. Flüssigkeitsbehälter nach einem der vorhergehenden Ansprüche, **dadurch gekennzeichnet, dass** die Sammeleinrichtung (10, 18) einstückig mit dem Boden (9) des Flüssigkeitsbehälters (1) gefertigt ist.

10. Flüssigkeitsbehälter nach einem der Ansprüche 1 bis 8, **dadurch gekennzeichnet, dass** die Sammeleinrichtung (10, 18) als in dem Flüssigkeitsbehälter zu montierendes Einlegeteil ausgebildet ist.

11. Flüssigkeitsbehälter nach einem der vorhergehenden Ansprüche, **dadurch gekennzeichnet, dass** in dem Sammelbehälter (11, 20) eine Aufnahmevorrichtung ((14) zur Befestigung einer Pumpe angeordnet ist.

## Claims

1. Fluid container for a motor vehicle, having a collection device and a collection container for collecting fluid, wherein the collection device projects above the floor of the fluid container, wherein the collection device (10, 18) has a plurality of guiding elements (13, 21) which are arranged in the interior of the fluid container (1), and the guiding elements (13, 21) are made to extend from a region at a distance from the collection container (11, 20) to the collection container (11, 20), **characterized in that** the collection device (10, 18) has a collection plate (12, 19) surrounding the collection container (11, 20), and **in that** the guiding elements (13, 21) are arranged on the collection plate (12, 19).

2. Fluid container according to Claim 1, **characterized in that** the collection plate (12, 19) is arranged above a floor (9) of the fluid container (1) and has openings (15).

3. Fluid container according to Claim 1 or 2, **characterized in that** an upright edge is arranged on the circumference of the collection plate (12, 19).

4. Fluid container according to Claim 2 or 3, **characterized in that** the collection plate (12, 19) is higher at its side facing the collection container (11, 20) than at its side facing the openings (15).

5. Fluid container according to one of Claims 1 to 4, **characterized in that** the collection plate (12, 19) is configured in the shape of a truncated cone, dropping away toward the edge, and has the collection container (11, 20) in the center.

6. Fluid container according to one of the preceding claims, **characterized in that** the guiding elements (13) are made to extend away from the collection container (11, 20) in the shape of a star.

7. Fluid container according to one of Claims 1 to 6, **characterized in that** the collection container (11, 20) is embodied as a depression in the collection plate (12, 19).

8. Fluid container according to one of Claims 1 to 7, **characterized in that** the collection container (11, 20), the collection plate (12) and the guiding elements (13, 21) are fabricated in one piece from plastic or metal.

9. Fluid container according to one of the preceding claims, **characterized in that** the collection device (10, 18) is fabricated in one piece with the floor (9) of the fluid container (1).

10. Fluid container according to one of Claims 1 to 8, **characterized in that** the collection device (10, 18) is embodied as an insertion part which is to be mounted in the fluid container.

11. Fluid container according to one of the preceding claims, **characterized in that** a receptacle device (14) for attachment to a pump is arranged in the collection container (11, 20).

## Revendications

1. Réservoir de liquide pour un véhicule automobile comprenant un dispositif collecteur et un contenant collecteur pour recueillir un liquide, le dispositif collecteur faisant saillie au-delà du fond du réservoir de liquide, le dispositif collecteur (10, 18) comprenant plusieurs éléments de guidage (13, 21) disposés dans l'espace intérieur du réservoir de liquide (1) et les éléments de guidage (13, 21) étant guidés à partir d'une région espacée du contenant collecteur (11, 20) jusqu'au contenant collecteur (11, 20), **caractérisé en ce que** le dispositif collecteur (10, 18) a une plaque collectrice (12, 19) entourant le contenant collecteur (11, 20) et **en ce que** les éléments de guidage (13, 21) sont disposés sur la plaque collectrice (12, 19).

2. Réservoir de liquide selon la revendication 1, **caractérisé en ce que** la plaque collectrice (12, 19) est disposée au-dessus d'un fond (9) du réservoir de liquide (1) et comprend des ouvertures (15).

3. Réservoir de liquide selon la revendication 1 ou 2, **caractérisé en ce qu'**un bord redressé est disposé à la périphérie de la plaque collectrice (12, 19).

4. Réservoir de liquide selon la revendication 2 ou 3, **caractérisé en ce que** la plaque collectrice (12, 19) est plus haute sur son côté tourné vers le contenant collecteur (11, 20) que sur son côté tourné vers les ouvertures (15).

5. Réservoir de liquide selon l'une quelconque des revendications 1 à 4, **caractérisé en ce que** la plaque collectrice (12, 19) est configurée sous forme tronconique et de manière inclinée jusqu'au bord, et comprend le contenant collecteur (11, 20) au centre.

6. Réservoir de liquide selon l'une quelconque des revendications précédentes, **caractérisé en ce que** les éléments de guidage (13) sont guidés en forme d'étoile à l'écart du contenant collecteur (11, 20).

7. Réservoir de liquide selon l'une quelconque des revendications 1 à 6, **caractérisé en ce que** le contenant collecteur (11, 20) est réalisé sous forme de cavité dans la plaque collectrice (12, 19).

8. Réservoir de liquide selon l'une quelconque des revendications 1 à 7, **caractérisé en ce que** le contenant collecteur (11, 20), la plaque collectrice (12) et les éléments de guidage (13, 21) sont fabriqués d'un seul tenant en plastique ou en métal.

9. Réservoir de liquide selon l'une quelconque des revendications précédentes, **caractérisé en ce que** le dispositif collecteur (10, 18) est fabriqué d'un seul tenant avec le fond (9) du réservoir de liquide (1).

10. Réservoir de liquide selon l'une quelconque des revendications 1 à 8, **caractérisé en ce que** le dispositif collecteur (10, 18) est réalisé sous forme de pièce d'insertion à monter dans le réservoir de liquide.

11. Réservoir de liquide selon l'une quelconque des revendications précédentes, **caractérisé en ce qu'**un dispositif de réception (14) pour la fixation d'une pompe est disposé dans le contenant collecteur (11, 20).
